# EUROPÄISCHE PATENTSCHRIFT

(11) **EP 2 102 483 B1**
(45) Veröffentlichungstag und Bekanntmachung des Hinweises auf die Patenterteilung: **12.09.2012**
(21) Anmeldenummer: 07820380.9
(22) Anmeldetag: 20.09.2007
(51) Int. Cl.: F02M 37/10, F16K 15/14

(54) **RESERVOIR FÜR EINEN KRAFTSTOFFBEHÄLTER**
RESERVOIR FOR A FUEL TANK
RÉSERVOIR INTERNE POUR RÉSERVOIR À CARBURANT

(30) Priorität: 25.10.2006 DE 102006050161
(43) Veröffentlichungstag der Anmeldung: 23.09.2009
(73) Patentinhaber: Robert Bosch GmbH, 70442 Stuttgart (DE)
(72) Erfinder: MALEC, Radek, 38901 Vodnany (CZ); PTACEK, Vladimir, 14300 Praha 4 - Modrany (CZ); PTACEK, Martin, 37005 Ceske Budejovice (CZ); SYKORA, Martin, 37011 Ceske Budejovice (CZ); JAROSIK, Josef, 37005 Ceske Budejovice (CZ); GABRIS, Miloslav, 37001 Ceske Budejovice (CZ)
(86) Internationale Anmeldenummer: PCT/EP2007/059937
(87) Internationale Veröffentlichungsnummer: WO 2008/049702

(56) Entgegenhaltungen:
- EP-A- 1 531 257
- DE-A1- 19 549 192
- DE-C1- 19 752 963
- GB-A- 558 201
- US-A- 4 986 310
- US-A- 5 680 847
- US-A1- 2005 155 583

## Beschreibung

### Stand der Technik

Die Erfindung geht aus von einem Reservoir nach der Gattung des Hauptanspruchs.

Es ist schon eine Vorrichtung zum Fördern von Kraftstoff aus der EP 0812387 A1 bekannt, mit einem Reservoir, das über eine Öffnung befüllbar ist, die mittels eines Schließelementes schließbar ist. Das Schließelement wirkt mit einem Dichtsitz zusammen und ist an einem Lager angeordnet, das im Bereich der Öffnung angeordnet und mittels zumindest zweier Stege an einem Randbereich der Öffnung befestigt ist. Die Öffnung mit dem Lager und den Stegen wird im Stand der Technik häufig im Spritzgussverfahren zusammen mit dem Reservoir und dessen Boden einstückig hergestellt. Nachteilig ist, dass die Stege bei der Herstellung eine Materialschwindung erfahren können, die zu einer Verspannung der Stege zwischen dem Randbereich der Öffnung und dem Lager führt. Dies kann eine ungleichmäßige Verformung und dadurch eine Unebenheit des Dichtsitzes zur Folge haben, so dass das Schließelement nicht dicht schließt und das Ventil eine Leckage aufweist.

DE 197 52 963 C1 offenbart ein Reservoir für einen Kraftstoffbehälter mit einer Öffnung und einem Lager für das Schließelement der Öffnung. Das Lager ist mittels von einem Steg an einem Boden des Reservoirs befestigt ist und hat einen ersten Abschnitt, der bis an den Boden des Reservoirs verläuft, und einen federnden Abschnitt, der bis an das Lager verläuft. Der zweite Abschnitt verläuft von dem ersten Abschnitt ausgehend spiralförmig.

EP 1 531 257 A2 offenbart ein Reservoir für einen Kraftstoffbehälter mit einer Öffnung und einem darin angeordneten Lager, das mittels von drei Stegen an einem Randbereich der Öffnung befestigt. Die Stege haben jeweils einen ersten Abschnitt, der bis an den Randbereich der Öffnung verläuft, und einen zweiten Abschnitt, der bis an das Lager verläuft.

### Vorteile der Erfindung

Das erfindungsgemäße Reservoir mit den kennzeichnenden Merkmalen des Hauptanspruchs hat demgegenüber den Vorteil, dass die Dichtheit der Öffnung verbessert wird, indem die Stege derart von der geradlinigen Form abweichend ausgebildet sind, dass ein elastischer Längenausgleich erreicht ist. Durch den Längenausgleich wird die Verspannung der Stege abgebaut, so dass der Dichtsitz seine Ebenheit behält. Die Dichtwirkung des Schließelementes wird auf diese Weise nicht mehr durch die Stege beeinträchtigt.

Durch die in den Unteransprüchen aufgeführten Maßnahmen sind vorteilhafte Weiterbildungen und Verbesserungen des im Hauptanspruch angegebenen Reservoirs möglich.

Gemäß einer vorteilhaften Ausführung hat der zumindest eine Steg einen Ausgleichsbereich, der zumindest eine U-förmige oder V-förmige Ausbuchtung oder Krümmung hat.

Besonders vorteilhaft ist, wenn die Öffnung in einem Boden des Reservoirs vorgesehen ist und der zumindest eine Steg derart ausgebildet ist, dass er aus der Ebene des Bodens herausragt. Durch das Herausragen aus der Ebene ist ein strömungstechnisch günstiger Dehnungsausgleich erreicht, der den Strömungsquerschnitt der Öffnung nur geringfügig verringert.

Nach einer vorteilhaften Ausgestaltung ist vorgesehen, den zumindest einen Steg bogenförmig, S-förmig, U-förmig, V-förmig, gekrümmt oder gezackt auszubilden.

Sehr vorteilhaft ist es, wenn der Ventilsitz als ringförmiger Absatz ausgebildet ist, da der Ventilsitz auf diese Weise sehr formstabil ist und weniger leicht verformbar ist, so dass ein Ventil mit hoher Dichtheit erreicht wird.

Auch vorteilhaft ist, wenn das Lager koaxial in der Öffnung angeordnet ist, da auf diese Weise die beste Dichtwirkung erzielbar ist.

Desweiteren vorteilhaft ist, wenn das Lager ringförmig mit einer zentralen Aussparung ausgebildet ist, da das Schließelement auf diese Weise sehr einfach in der Aussparung lagerbar ist.

Darüber hinaus vorteilhaft ist, wenn das Schliesselement schirmförmig und elastisch biegsam ausgebildet ist, da auf diese Weise eine sehr einfache, zuverlässige und kostengünstige Ventilfunktion erreicht ist.

### Zeichnung

Ein Ausführungsbeispiel der Erfindung ist in der Zeichnung vereinfacht dargestellt und in der nachfolgenden Beschreibung näher erläutert.
- Fig.1: zeigt im Schnitt eine vereinfachte Ansicht einer Vorrichtung zum Fördern von Kraftstoff mit dem erfindungsgemäßen Reservoir und

- Fig.2: eine dreidimensionale Teilansicht des Reservoirs nach Fig.1 mit der erfindungsgemäßen Öffnung des Reservoirs.

### Beschreibung des Ausführungsbeispiels

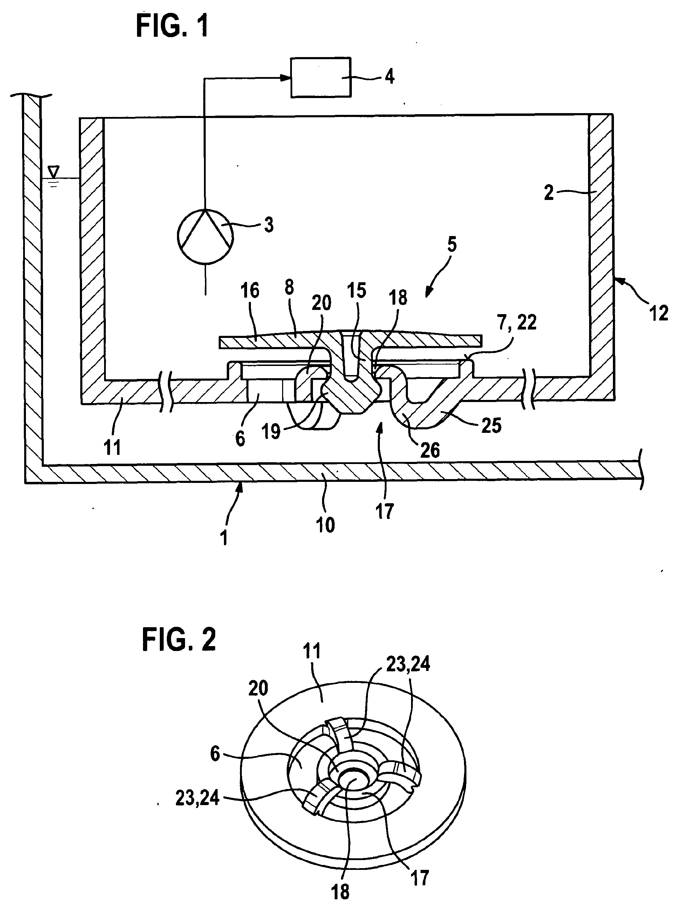

Fig.1 zeigt im Schnitt eine vereinfachte Ansicht einer Vorrichtung zum Fördern von Kraftstoff mit dem erfindungsgemäßen Reservoir.

Die Vorrichtung weist ein in einem Kraftstoffbehälter 1 angeordnetes Reservoir 2 auf, in dem ein Förderaggregat 3 angeordnet sein kann, das Kraftstoff aus dem Reservoir 2 ansaugt und zu einer Brennkraftmaschine 4 fördert. Das Förderaggregat 3 kann aber ausdrücklich auch außerhalb des Reservoirs 2 und des Kraftstoffbehälters 1 angeordnet sein, beispielsweise in einem Motorraum eines Fahrzeuges.

Bei der Erstbefüllung des Kraftstoffbehälters 1 muß der in den Kraftstoffbehälter 1 eingefüllte Kraftstoff selbständig, also ohne Fördermittel wie beispielsweise einer Saugstrahlpumpe, in das topfförmige Reservoir 2 einfließen, damit das Fahrzeug sofort gestartet werden kann. Hierzu weist das Reservoir 2 ein Erstbefüllventil 5 auf, das durch eine Öffnung 6 mit einem Ventilsitz 7 und ein mit dem Ventilsitz 7 zusammenwirkenden Schließelement 8 gebildet ist. Das Erstbefüllventil 5 öffnet nur, wenn der hydrostatische Druck im Kraftstoffbehälter 1 größer ist als in dem Reservoir 2. Es wirkt als Rückschlagventil und lässt nur Kraftstoff in das Reservoir 2 einströmen. Die entgegengesetzte Strömungsrichtung aus dem Reservoir 2 heraus ist durch das Ventil 5 gesperrt.

Die Öffnung 6 ist in einem unteren, einem Tankboden 10 des Kraftstoffbehälters 1 nahen Bereich des Reservoirs 2 vorgesehen, beispielsweise in einem Boden 11 des Reservoirs 2. Die Öffnung 6 kann aber ausdrücklich auch im unteren Bereich einer Umfangswandung 12 des Reservoirs 2 ausgebildet sein.

Das Erstbefüllventil 5 ist beispielsweise als Schirmventil ausgebildet mit einem schirmförmigen Schließelement 8. Das Schließelement 8 hat einen stift- oder zapfenförmigen Zentralabschnitt 15 und einen an dem Zentralabschnitt 15 angeordneten bogenförmigen oder scheibenförmigen Schließabschnitt 16. Das Schließelement 8 ist gemäß dieser Ausführung elastisch ausgebildet und aus einem Elastomer, beispielsweise Gummi, hergestellt. Der Schließabschnitt 16 ist daher biegsam und kann sich in vom Ventilsitz 7 abgewandter Richtung zurückbiegen. Das Schließelement 8 kann jedoch auch aus einem starren Kunststoff oder Metall hergestellt sein.

Der Zentralabschnitt 15 und der Schließabschnitt 16 des Schließelementes 8 sind beispielsweise einstückig ausgeführt.

Der Zentralabschnitt 15 des Schließelementes 8 ist in einem Lager 17 gehalten, das beispielsweise koaxial mit der Öffnung 6 angeordnet ist. Das Lager 17 kann sowohl in der Öffnung 6 als auch außerhalb im Bereich der Öffnung 6 angeordnet sein. Das Lager 17 ist beispielsweise ringförmig ausgebildet mit einer zentralen Aussparung, beispielsweise einer Durchgangsöffnung 18, durch die der Zentralabschnitt 16 des Schließelementes 8 hindurchragt. Das Schließelement 8 ist formschlüssig und/oder kraftschlüssig mit dem Lager 17 verbunden. Beispielsweise ist das Schließelement 8 auf das Lager 17 aufgesteckt und verrastet mit diesem, indem ein Hinterschnitt 18 des Zentralabschnitts 15 eine an der Durchgangsöffnung 18 gebildete Schulter 20 hintergreift. Das Schließelement 8 ist in dem Lager 17 beispielsweise derart gelagert, dass es einen vorbestimmten axialen Öffnungshub ausführen kann. Die Öffnung des Schließelementes 8 kann durch einen axialen Hub des Schließelementes 8 und/oder durch eine elastische Biegung des Schließabschnittes 16 erfolgen.

Das Lager 17 wird durch zumindest zwei, beispielsweise drei Stege 23 im Bereich der Öffnung 6 gehalten. Die Stege 23 verlaufen von dem Lager 17 radial nach außen bis an den Randbereich der Öffnung 6 und sind dort mit diesem fest verbunden, beispielsweise einstückig. Der Randbereich der Öffnung 6 ist beispielsweise Teil des Bodens 11 des Reservoirs 2. Es kann aber auch vorgesehen sein, das erfindungsgemäß ausgebildete Erstbefüllventil 5 als separates Teil auszuführen, das eine Öffnung 6, ein Lager 17, Stege 23 und einen Randbereich aufweist.. Ein solches separates Erstbefüllventil ist dann mit seinem Randbereich in einer Öffnung des Reservoirs 2 angeordnet.

Die Stege 23 sind in Umfangsrichtung zueinander beabstandet und teilen die Öffnung 6 in mehrere Teilabschnitte.

Beim einstückigen Spritzgießen von dem Boden 11 des Reservoirs 2, der Öffnung 6, den Stegen 23 und dem Lager 17 kann in den Stegen 23 Materialschwindung auftreten, durch die die Stege 23 zwischen dem Lager 17 und dem Randbereich der Öffnung 6 verspannt werden. Diese Verspannungen wirken auf den Ventilsitz 7 als nach radial innen wirkende Zugkräfte. Wenn die Verspannungen unterschiedlich hoch sind, wird der Ventilsitz 7 ungleichmäßig verformt, so dass seine mit dem Schließelement 8 zusammenwirkende und diesem zugewandte Dichtfläche 22 uneben wird.

Erfindungsgemäß ist zumindest ein Steg 23 derart von der geradlinigen Form abweichend ausgebildet, dass ein elastischer Dehnungsausgleich 24 erreicht ist. Durch den Dehnungs- bzw. Längenausgleich 24 wird die Verspannung der Stege 23 infolge Materialschwindung verringert bzw. ganz abgebaut, so dass der Ventilsitz 7 weniger stark oder gar nicht durch Verspannungen belastet wird.

Nach einer Ausgestaltung ist der Dehnungsausgleich erreicht, indem zumindest ein Steg 23 derart ausgebildet ist, dass er abschnittsweise auf beliebige Art aus der Ebene des Bodens 11 bzw. der Öffnung 6 herausragt.

Der Dehnungsausgleich 24 wird beispielsweise durch einen bogenförmiges, S-förmiges, U-förmiges, V-förmiges, gekrümmten, gezackten, hakenförmigen oder ähnlichen Verlauf der Stege 23 erreicht. Beispielsweise hat zumindest ein Steg 23 bereichsweise eine U-förmige oder V-förmige Ausbuchtung oder Krümmung.

Gemäß einer möglichen Ausführung weist zumindest ein Steg 23 einen ersten Schenkel 25 auf, der bis an den Randbereich der Öffnung 6 verläuft, und einen zweiten Schenkel 26, der bis an das Lager 17 verläuft. Die beiden Schenkel 25,26 schließen einen spitzen Winkel ein und bilden eine U-förmige oder V-förmige Ausbuchtung, die beispielsweise zum Tankboden 10 des Kraftstoffbehälters 1 hin ausgebuchtet ist.

Der Ventilsitz 7 ist durch einen ringförmigen Absatz 23 gebildet, der gegenüber dem Boden 11 des Reservoirs erhaben ist und in das Reservoir 2 hineinreicht.. Durch den ringförmigen Absatz 23 erhält der Ventilsitz 7 eine größere Stabilität und ist weniger leicht verformbar. Auf diese Weise ist gewährleistet, dass die Ebenheit des Ventilsitzes 7 erhalten bleibt. Die dem Boden 11 abgewandte Stirnfläche des Absatzes 23 bildet die Dichtfläche 22.

Das Reservoir 2 kann Teil eines Kraftstofffördermoduls sein, das neben dem Förderaggregat 3 weitere Komponenten, wie beispielsweise einen Grob- und Feinfilter, einen Druckregler und eine Saugstrahlpumpe aufweist.

Fig.2 zeigt eine dreidimensionale Teilansicht des Reservoirs nach Fig. 1 mit der erfindungsgemäßen Öffnung des Reservoirs. Gezeigt ist eine Teilansicht des Reservoirs von unten.

Bei der Ansicht nach Fig.2 sind die gegenüber der Vorrichtung nach Fig.1 gleichbleibenden oder gleichwirkenden Teile durch die gleichen Bezugszeichen gekennzeichnet.

## Patentansprüche

1. Reservoir für einen Kraftstoffbehälter, das über eine Öffnung (6) befüllbar ist, die mittels eines Schließelementes (8) schließbar ist, das mit einem Dichtsitz (7) zusammenwirkt und an einem Lager (17) angeordnet ist, das mittels von Stegen (23) an einem Randbereich der Öffnung (6) befestigt ist, wobei zumindest einer der Stege (23) mit einem ersten Schenkel (25) bis an den Randbereich der Öffnung (6) und mit einem zweiten Schenkel (26) bis an das Lager (17) verläuft und derart von der geradlinigen Form abweichend ausgebildet ist, dass ein elastischer Dehnungsausgleich (24) erreicht ist, wobei die beiden Schenkel (25,26) einen spitzen Winkel einschließen und eine U-förmige oder V-förmige Ausbuchtung bilden, **dadurch gekennzeichnet, dass** die U-förmige oder V-förmige Ausbuchtung aus der Ebene der Öffnung (6) nach außerhalb des Reservoirs herausragt.

2. Reservoir nach Anspruch 1, **dadurch gekennzeichnet, dass** zumindest ein Steg (23) einen Ausgleichsbereich aufweist, der zumindest eine U-förmige oder V-förmige Ausbuchtung oder Krümmung hat.

3. Reservoir nach Anspruch 1, **dadurch gekennzeichnet, dass** die Öffnung (6) in einem Boden (11) des Reservoirs (2) vorgesehen ist und der zumindest eine Steg (23) derart ausgebildet ist, dass er aus der Ebene des Bodens (11) herausragt.

4. Reservoir nach Anspruch 1, **dadurch gekennzeichnet, dass** zumindest ein Steg (23) bogenförmig, S-förmig, U-förmig, V-förmig, gekrümmt, gezackt oder ähnlich ausgebildet ist.

5. Reservoir nach Anspruch 1, **dadurch gekennzeichnet, dass** die Öffnung (6) in einem Boden (11) des Reservoirs (2) vorgesehen ist.

6. Reservoir nach Anspruch 1, **dadurch gekennzeichnet, dass** der Ventilsitz (7) als ringförmiger Absatz ausgebildet ist.

7. Reservoir nach Anspruch 1, **dadurch gekennzeichnet, dass** das Lager (17) koaxial mit der Öffnung (6) angeordnet ist.

8. Reservoir nach Anspruch 1, **dadurch gekennzeichnet, dass** das Lager (17) ringförmig mit einer zentralen Aussparung (18) ausgebildet ist.

9. Reservoir nach Anspruch 1, **dadurch gekennzeichnet, dass** das Schliesselement (8) schirmförmig mit einem stiftförmigen Zentralabschnitt (15) und einem scheibenförmigen Schließabschnitt (16) ausgebildet ist.

## Claims

1. Reservoir for a fuel tank, which reservoir can be filled via an orifice (6) which can be closed by means of a closing element (8) which cooperates with a sealing seat (7) and is arranged on a bearing (17) which is fastened to a marginal region of the orifice (6) by means of webs (23), at least one of the webs (23) running with a first limb (25) as far as the marginal region of the orifice (6) and with a second limb (26) as far as the bearing (17) and being designed to deviate from the rectilinear shape in such a way that elastic expansion compensation (24) is achieved, two limbs (25, 26) making an acute angle and forming a U-shaped or a V-shaped indentation, **characterized in that** the U-shaped or V-shaped indentation projects out of the plane of the orifice (6) towards the outside of the reservoir.

2. Reservoir according to Claim 1, **characterized in that** at least one web (23) has a compensation region which has at least one U-shaped or V-shaped indentation or curvature.

3. Reservoir according to Claim 1, **characterized in that** the orifice (6) is provided in a bottom (11) of the reservoir (2), and the at least one web (23) is designed in such a way that it projects out of the plane of the bottom (11).

4. Reservoir according to Claim 1, **characterized in that** at least one web (23) is of arcuate, S-shaped, U-shaped, V-shaped, curved, serrated or such like form.

5. Reservoir according to Claim 1, **characterized in that** the orifice (6) is provided in a bottom (11) of the reservoir (2).

6. Reservoir according to Claim 1, **characterized in that** the valve seat (7) is in the form of an annular step.

7. Reservoir according to Claim 1, **characterized in that** the bearing (17) is arranged coaxially with the orifice (6).

8. Reservoir according to Claim 1, **characterized in that** the bearing (17) is of annular form with a central clearance (18).

9. Reservoir according to Claim 1, **characterized in that** the closing element (8) is of umbrella-shaped form with a pin-shaped central portion (15) and with a disc-shaped closing portion (16).

## Revendications

1. Réservoir pour un réservoir de carburant, qui peut être rempli par le biais d'une ouverture (6) qui peut être fermée au moyen d'un élément de fermeture (8) qui coopère avec un siège d'étanchéité (7) et qui est disposé sur un support (17) qui est fixé à une région de bord de l'ouverture (6) au moyen de nervures (23), au moins l'une des nervures (23) s'étendant par l'intermédiaire d'une première branche (25) jusqu'à la région de bord de l'ouverture (6) et s'étendant par l'intermédiaire d'une deuxième branche (26) jusqu'au support (17), et étant réalisée de manière à différer de la forme rectiligne de telle sorte qu'une compensation de la dilatation élastique (24) soit obtenue, les deux branches (25, 26) formant un angle aigu et formant un renflement en forme de U ou en forme de V, **caractérisé en ce que** le renflement en forme de U ou en forme de V fait saillie hors du plan de l'ouverture (6) vers l'extérieur du réservoir.

2. Réservoir selon la revendication 1, **caractérisé en ce qu'**au moins une nervure (23) comprend une région de compensation qui présente au moins une courbure ou un renflement en forme de U ou en forme de V.

3. Réservoir selon la revendication 1, **caractérisé en ce que** l'ouverture (6) est prévue dans le fond (11) du réservoir (2), et l'au moins une nervure (23) est réalisée de telle sorte qu'elle fasse saillie hors du plan du fond (11).

4. Réservoir selon la revendication 1, **caractérisé en ce qu'**au moins une nervure (23) est réalisée de manière arquée, en forme de S, en forme de U, en forme de V, de manière courbée, de manière dentelée ou similaire.

5. Réservoir selon la revendication 1, **caractérisé en ce que** l'ouverture (6) est prévue dans le fond (11) du réservoir (2).

6. Réservoir selon la revendication 1, **caractérisé en ce que** le siège de soupape (7) est réalisé sous forme d'épaulement annulaire.

7. Réservoir selon la revendication 1, **caractérisé en ce que** le support (17) est disposé coaxialement à l'ouverture (6).

8. Réservoir selon la revendication 1, **caractérisé en ce que** le support (17) est réalisé de manière annulaire avec un évidement central (18).

9. Réservoir selon la revendication 1, **caractérisé en ce que** l'élément de fermeture (8) est réalisé en forme de parapluie avec une section centrale (15) en forme de cheville et une section de fermeture (16) en forme de disque.
